# FASCICULE DE BREVET EUROPEEN

(11) **EP 2 269 848 B1**
(45) Date de publication et mention de la délivrance du brevet: **21.03.2012**
(21) Numéro de dépôt: 10167969.4
(22) Date de dépôt: 30.06.2010
(51) Int. Cl.: B60G 21/05

(54) **Traverse déformable d'essieu arrière et son procédé pour sa fabrication**
Querträger für eine Verbundlenkerachsen-hinterradaufhängung für ein Kraftfahrzeug und Verfahren zur Herstellung
Cross-member for a rear twist-beam axle suspension for a vechicle and method for its production

(30) Priorité: 01.07.2009 FR 0954510
(43) Date de publication de la demande: 05.01.2011
(73) Titulaire: Thyssenkrupp Sofedit, 61260 Le Theil (FR)
(72) Inventeur: Hauguel, Fabrice, 95250, BEAUCHAMP (FR); Naturel, Jérôme, 75018, PARIS (FR)
(74) Mandataire: Branger, Jean-Yves

(56) Documents cités:
- DE-A1- 10 054 692
- DE-A1- 19 949 341
- US-A1- 2003 044 632
- US-A1- 2003 122 344

## Description

La présente invention est relative à une traverse déformable d'essieu arrière de véhicule automobile.

Elle se rapporte également à un procédé de fabrication d'une telle traverse, ainsi qu'à un essieu arrière de véhicule qui en est équipé.

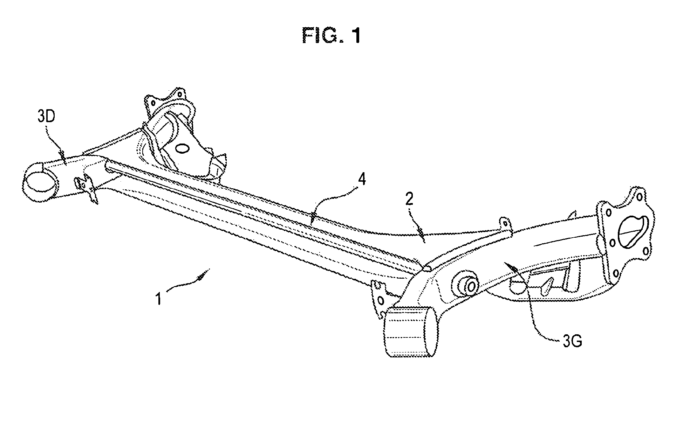

A la figure 1 annexée est représenté, schématiquement et en perspective, un essieu arrière de véhicule automobile à traverse déformable, de type connu.

Cet essieu 1 est composé d'une traverse 2, constituée d'un profilé creux déformable en torsion.

A ses extrémités, il est relié à deux bras symétriques 3D et 3G, en l'occurrence un bras droit et un bras gauche.

Ces bras sont fixés par l'une de leurs extrémités à la caisse du véhicule et par l'autre extrémité à une roue.

Cette traverse 2 "souple" permet de régler les exigences du constructeur automobile en matière de guidage.

Mais comme le montre également la figure 1, l'essieu comporte aussi une barre 4 anti-dévers, mise en place pour des exigences de comportement en roulis.

Une telle structure d'essieu arrière donne généralement satisfaction.

Toutefois, on cherche à simplifier la structure d'un tel essieu pour gagner à la fois en poids et en coût, ainsi que pour s'affranchir des difficultés de réalisation de la liaison entre la barre anti-dévers et le reste de l'essieu.

Ainsi, on décrit dans le document DE-A-10054692, un essieu à traverse déformable en torsion, cette traverse étant constituée de deux profilés distincts, assemblés l'un à l'autre pour constituer un ensemble présentant une section en forme générale de U ou de V, pourvu de deux parois accolées ou, en tout état de cause, très proches.

Dans cette structure, dans laquelle la traverse fait également office de barre anti-dévers, on se trouve confronté à des problèmes de frottement et de bruit générés par le contact entre les parois, ou leur proximité.

De plus, du fait de l'assemblage de deux profilés distincts, il est nécessaire de mettre en oeuvre des dimensionnements de pièces très précis, sauf à ne pas pouvoir assembler correctement les profilés ensemble.

On décrit dans le document US-A-2003/122344, une traverse qui est constituée d'une feuille de métal mise en forme et qui présente, vue en coupe transversale, un contour fermé. Ce contour présente une forme générale en "U", avec une première portion de la feuille délimitant une paroi "intérieure" de ce "U", tandis que la deuxième portion délimite une paroi extérieure du "U" espacée de la première.

Une telle traverse est de conception simple et possède un comportement à la déformation correspondant aux attentes habituelles.

Il existe toutefois un besoin, jusqu'ici insatisfait, de proposer une traverse du genre évoqué ci-dessous qui permet une fixation améliorée de celle-ci aux bras longitudinaux de l'essieu d'un véhicule.

Ainsi, selon un premier aspect de l'invention, celle-ci concerne une traverse déformable d'essieu arrière de véhicule automobile, qui est constituée d'une seule et unique feuille de métal mise en forme, notamment par emboutissage et/ou pliage, et qui présente, vue en coupe transversale, un contour fermé, ce contour présentant la forme générale d'un "U", une première portion de la feuille délimitant une paroi "intérieure" de ce "U", tandis qu'une deuxième portion délimite une paroi "extérieure" de ce "U", espacée de la première, caractérisée par le fait que longitudinalement, ladite paroi intérieure se prolonge au-delà de la paroi extérieure.

Comme on le verra plus loin dans la suite de la description, cette structure a une double fonction de barre de torsion ou anti-dévers, et de traverse déformable.

Selon d'autres caractéristiques avantageuses et non limitatives de cette traverse :
- ledit "U" a une forme symétrique ;
- ladite paroi extérieure est formée par la réunion, c'est à dire la jonction de deux bords opposés de ladite feuille ;
- lesdits bords sont fixés l'un à l'autre, notamment par soudage ou sertissage ;
- longitudinalement, ladite paroi intérieure se prolonge au-delà de la paroi extérieure.

La présente invention se propose également de fournir un procédé de fabrication d'une telle traverse.

Ce procédé se caractérise essentiellement par le fait qu'il consiste à appliquer successivement les étapes suivantes à une unique feuille métallique plane:
a/ déformer ladite feuille, de part et d'autre d'un plan médian, perpendiculaire au plan de la feuille, pour constituer un élément saillant qui s'élève au dessus dudit plan de la feuille, sur toute sa longueur ;
b/ déformer et relever les ailes longitudinales de la feuille, de part et d'autre dudit élément saillant ;
c/ réunir les bords de ces ailes au dessus et à distance dudit élément saillant,
et en ce que l'on utilise une feuille présentant une forme telle qu'à l'issue de la mise en oeuvre desdites étapes a), b), c), la paroi intérieure de ladite traverse se prolonge au-delà de la paroi extérieure.

Avantageusement, à l'étape a), on forme un élément saillant comportant deux flancs parallèles et perpendiculaires au plan de la feuille.

Dans des modes de réalisation préférés de ce procédé :
- entre les étapes b/ et c/, on met en oeuvre une étape supplémentaire b'/ dans laquelle on procède à la déformation des flancs de l'élément saillant pour les rapprocher l'un de l'autre ;
- à ladite étape c/, on procède à la réunion desdits bords par déplacement desdites ailes à l'aide de cames ;
- à l'étape c/, on procède à la réunion desdits bords de manière à ce qu'ils se chevauchent ou soient accolés l'un à l'autre.

Enfin, la présente invention est également relative à un essieu arrière de véhicule automobile qui comprend une traverse déformable dont les extrémités opposées sont fixées chacune à un bras, lui-même fixé d'une part à la caisse du véhicule et d'autre part à une roue, caractérisé par le fait que la traverse est conforme à l'une des caractéristiques mentionnées plus haut ou obtenue conformément au procédé également décrit plus haut.

Selon un mode de réalisation particulier, cet essieu est dépourvu de barre anti-dévers

Avantageusement :
- chaque bras est formé de deux profilés ou coquilles à section en "U", respectivement inférieur(e) et supérieur(e), réuni(e)s au niveau des extrémités de leurs ailes ;
- les parois intérieure et extérieure de la traverse sont respectivement solidaires desdits profilés ou coquilles.

D'autres caractéristiques et avantages de la présente invention apparaîtront à la lecture de la description détaillée d'un mode de réalisation préféré.

Cette description sera faite en référence aux dessins annexés dans lesquels :
Les figures 2A à 2G sont des vues en bout d'une feuille de métal que l'on déforme pour obtenir une traverse déformable, conformément au procédé selon l'invention, chaque vue illustrant une opération particulière.
La figure 3 est une vue en perspective d'une traverse selon l'invention, fixée à un bras d'un essieu arrière de véhicule automobile.
La figure 4 est une vue en perspective illustrant comment s'opère la fixation de la traverse à un profilé ou coquille constitutive du bras précité.
Les figures 5 et 6 sont également des vues destinées à illustrer comment s'opère la fixation de la traverse à une coquille ou profilé complémentaire du bras précité.

Par convention, dans l'ensemble de la présente demande, on référencera 5 la feuille de métal que l'on déforme pour constituer la traverse selon l'invention, mais cette feuille sera référencée 2 lorsque sa transformation en une traverse aura été effectuée.

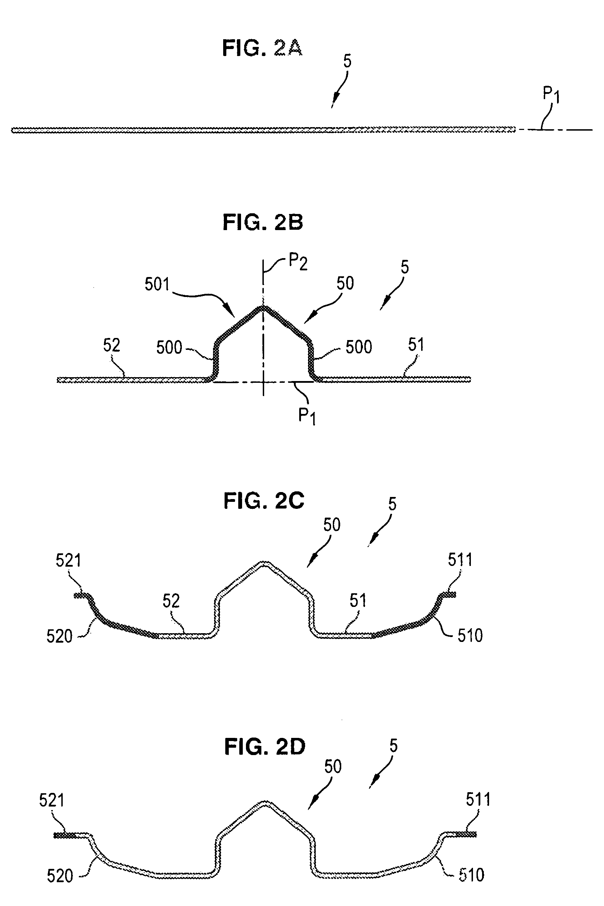

Par ailleurs et en référence aux figures 2A à 2G, les parties de la feuille que l'on soumet à une déformation apparaissent en noir, tandis que les autres parties non déformées apparaissent en clair.

En se référant à la figure 2A, on a affaire à une feuille métallique 5 plane et dont le contour s'inscrit dans un rectangle, dont le plan dans lequel elle est contenu est référencé P₁.

Préférentiellement, ladite feuille présente deux côtés longitudinaux, continus et parallèles, et deux côtés transversaux qui, dans leur région médiane, présentent un décrochement vers l'extérieur, ce qui confère à la feuille, vue de dessus, une forme générale de croix grecque.

Une première étape consiste à déformer cette feuille 5, symétriquement de part et d'autre du plan médian P₂ perpendiculaire au plan P₁ de la feuille 5, pour constituer un élément saillant 50 qui s'étend au-dessus du plan P₁ de la feuille, sur toute sa longueur.

Dans l'exemple représenté ici, cette déformation se fait symétriquement de part et d'autre dudit plan. Toutefois, on peut envisager une déformation non symétrique.

De plus, l'élément 50 n'a pas forcément une profondeur constante sur toute l'étendue longitudinale de la feuille.

A l'issue de cette opération, la feuille présente alors la physionomie représentée à la figure 2B.

Cette déformation est préférentiellement mise en oeuvre par emboutissage de la feuille 5.

L'élément saillant 50 a, dans l'exemple représenté ici, une section transversale qui s'inscrit globalement dans un U avec deux ailes ou flancs parallèles 500 et une base 501 à faces divergentes, formant un dièdre.

Bien entendu, dans la forme de réalisation selon laquelle le U n'est pas symétrique, les ailes 500 peuvent être parallèles ou non.

De part et d'autre des flancs 500 s'étendent les deux ailes 51 et 52 de la feuille 5.

L'opération suivante consiste à déformer et relever les ailes longitudinales 51 et 52 de la feuille, de part et d'autre dudit élément saillant 50. On opère ici de manière symétrique, mais ceci n'est pas obligatoire. Ceci est l'objet des figures 2C et 2D.

Ainsi, à la figure 2C, on procède à un léger relevage des ailes 51 et 52 pour constituer des régions légèrement relevées 510 et 520 avec des bords d'extrémité rabattus 511 et 521, parallèlement au plan précité.

La figure 2D représente simplement une opération de détourage de fin de pièce.

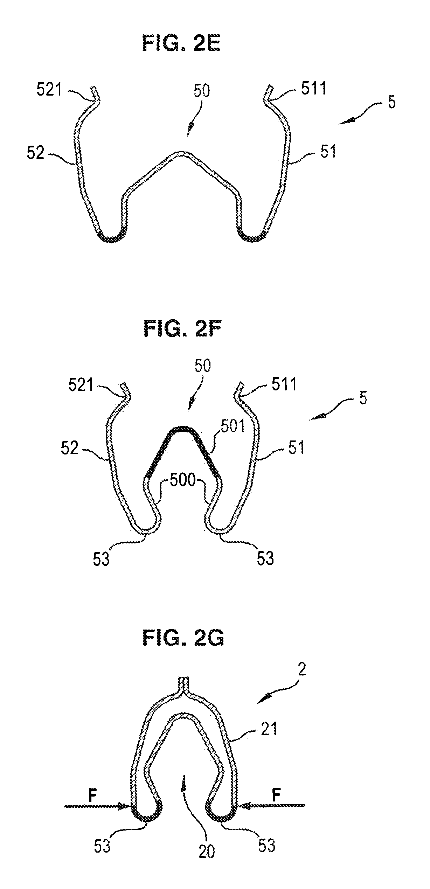

En référence à la figure 2E, on procède au cambrage des deux ailes 51 et 52 de manière à ce qu'elles s'étendent sensiblement parallèlement et à distance des flancs 500 de l'élément saillant 50.

Dans l'étape représentée à la figure 2F, on procède à la déformation des flancs 500 de l'élément saillant 50 pour les rapprocher l'un de l'autre.

Cette opération peut être réalisée par un pliage effectué au niveau de la base 501 de cet élément saillant.

Enfin, à la figure 2G, on procède à la fermeture du profilé ainsi réalisé par déplacement des ailes 51 et 52 à l'aide de cames opérant dans les régions 53 représentées sur cette figure, comme le montre les flèches F.

Dans cette configuration, les bords 511 et 521 de la feuille 5 se trouvent accolés, parallèlement l'un à l'autre.

Toutefois, dans un autre mode de réalisation, on pourrait envisager que ces bords se chevauchent légèrement.

Bien entendu, pour renforcer une telle structure, on procède à la fixation des bords 511 et 521 l'un à l'autre, notamment par soudage ou sertissage.

Au final, on a donc affaire à une traverse 2 présentant la configuration de la figure 2G à savoir qu'elle présente, vue selon cette coupe transversale, un contour fermé avec une forme générale similaire à un "U", une première portion de la feuille 5 délimitant une paroi intérieure de ce "U", tandis qu'une deuxième portion délimite une paroi extérieure 21 de ce "U", espacée de la première.

Autrement dit, les opérations décrites précédemment permettent de créer une traverse 2 à double parois non contiguës, dont les extrémités sont solidaires.

Ces deux parois ont une double fonction de traverse déformable et de barre anti-dévers.

On peut régler la raideur de la traverse en jouant sur la profondeur, c'est-à-dire sur la hauteur de l'élément saillant 50 lors de l'opération d'emboutissage illustrée à la figure 2B. On peut aussi agir sur l'espace entre les parois.

Ce réglage peut être aussi fait en jouant sur la forme de l'élément 50, notamment sur les flancs 500 qui peuvent être en contre-dépouille ou non.

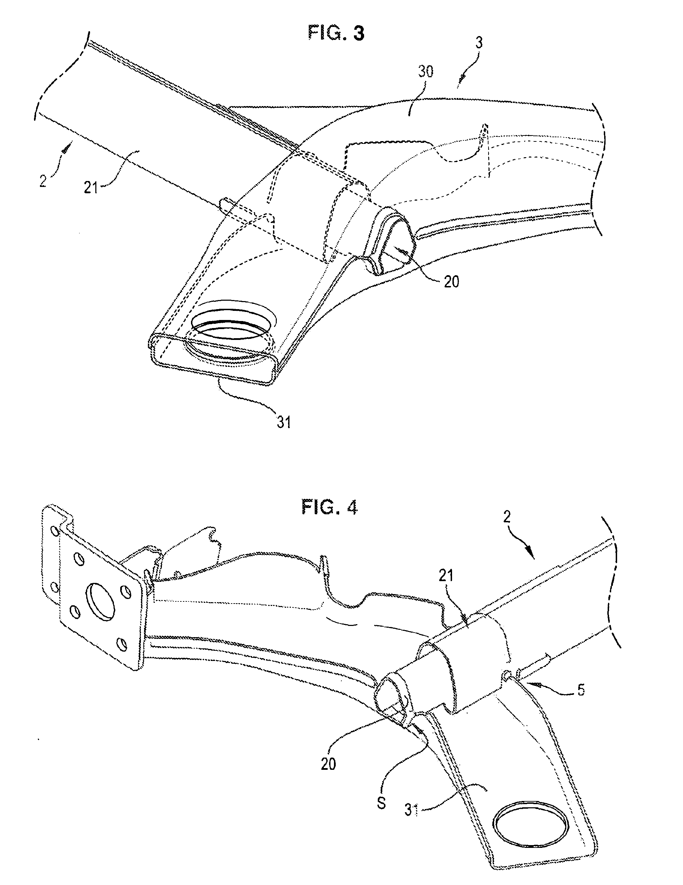

On se reportera maintenant aux figures 3 à 6 pour expliquer la manière dont la traverse 2 de l'invention est intégrée au sein d'un essieu arrière de véhicule automobile.

En raison de la forme particulière de la feuille 5, la traverse obtenue présente une paroi intérieure 20 se prolongeant au-delà de la paroi extérieure 21, ainsi cela est particulièrement visible aux figures 3 et 4.

Cette différence de longueur peut être mise en oeuvre par découpage de la feuille 5, juste avant l'étape illustrée à la figure 2B.

A la figure 3 est visible l'un des deux bras de l'essieu auquel la traverse 2 est fixée.

Ce bras 3 est constitué de deux profilés supérieur 30 et inférieur 31, qui ont une forme de coquille à section transversale en "U".

Une telle structure est de type connue et les deux "U" sont fixés l'un à l'autre par l'extrémité libre de leurs ailes.

Conformément à l'invention, la traverse 2 est solidarisée à chacun des profilés 30 et 31 au niveau de ses parois intérieure 20 et extérieure 21.

Ainsi, comme le montre plus particulièrement la figure 4, la traverse 2 est soudée sur le profilé ou coquille inférieur(e) 31 du bras 3, à la fois au niveau de sa paroi intérieure 20 et au niveau de sa paroi extérieure 21.

Les soudures étant repérées S sur cette figure.

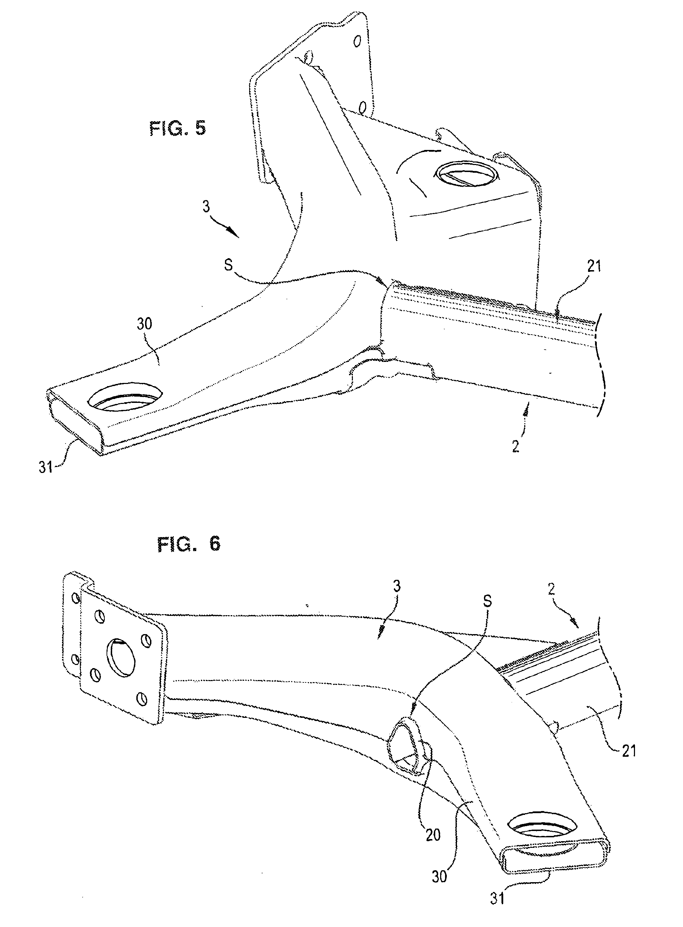

Pour finir, et comme le montrent les deux figures 5 et 6, le profilé ou coquille supérieure 30 du bras est soudé sur la traverse 2, aussi bien au niveau de sa paroi intérieure 20 que sa paroi extérieure 21.

Compte tenu du décalage longitudinal des parois intérieure 20 et extérieure 21, leur fixation aux bras est facilitée sur le plan opérationnel. En effet, cette fixation est opérée dans deux régions distantes l'une de l'autre, ce qui permet d'améliorer la qualité de chacune d'entre elles.

## Revendications

1. Traverse (2) déformable d'essieu arrière de véhicule automobile, qui est constituée d'une seule et unique feuille (5) de métal mise en forme, notamment par emboutissage et/ou pliage, et qui présente, vue en coupe transversale, un contour fermé, ce contour présentant la forme générale d'un "U", une première portion de la feuille (5) délimitant une paroi "intérieure" (20) de ce "U", tandis qu'une deuxième portion délimite une paroi "extérieure" (21) de ce "U", espacée de la première, **caractérisée par le fait que** longitudinalement, ladite paroi intérieure (20) se prolonge au-delà de la paroi extérieure (21).

2. Traverse selon la revendication 1, **caractérisée par le fait que** le "U" a une forme symétrique.

3. Traverse selon la revendication 1 ou 2, **caractérisée par le fait que** ladite paroi extérieure (21) est formée par la réunion, c'est à dire la jonction de deux bords opposés (511, 521) de ladite feuille (5).

4. Traverse selon la revendication 3, **caractérisée par le fait que** lesdits bords (511, 521) sont fixés l'un à l'autre, notamment par soudage ou sertissage.

5. Procédé de fabrication d'une traverse (2) déformable d'essieu arrière de véhicule automobile conforme à l'une des revendications 1 à 4, **caractérisé par le fait qu'**il consiste à appliquer successivement les étapes suivantes à une unique feuille (5) métallique plane :
a/ déformer ladite feuille (5), de part et d'autre d'un plan (P₂) médian, perpendiculaire au plan (P₁) de la feuille (5), pour constituer un élément saillant (50) qui s'élève au dessus dudit plan (P₁) de la feuille, sur toute sa longueur ;
b/ déformer et relever les ailes longitudinales (51, 52) de la feuille (5) de part et d'autre dudit élément saillant (50) ;
c/ réunir les bords (511, 521) de ces ailes (51, 52) au dessus et à distance dudit élément saillant (50),
et en ce que l'on utilise une feuille présentant une forme telle qu'à l'issue de la mise en oeuvre desdites étapes a), b), c), la paroi intérieure (20) de ladite traverse (2) se prolonge au-delà de la paroi extérieure (21).

6. Procédé selon la revendication précédente, **caractérisé par le fait que**, à l'étape a/, on forme un élément saillant (50) comportant deux flancs parallèles (500) et perpendiculaires au plan (P₁) de la feuille.

7. Procédé selon l'une des revendications 5 ou 6, **caractérisé par le fait qu'**entre les étapes b/ et c/, on met en oeuvre une étape supplémentaire b'/ dans laquelle on procède à la déformation des flancs (500) de l'élément saillant (50) pour les rapprocher l'un de l'autre.

8. Procédé selon l'une des revendications 5 à 7, **caractérisé par le fait qu'**à ladite étape c/, on procède à la réunion desdits bords (511, 521) par déplacement desdites ailes (51, 52) à l'aide de cames.

9. Procédé selon l'une des revendications 5 à 8, **caractérisé par le fait que**, à l'étape c/, on procède à la réunion desdits bords (511, 521) de manière à ce qu'ils se chevauchent ou soient accolés l'un à l'autre.

10. Essieu arrière (1) de véhicule automobile, qui comprend une traverse déformable (2) dont les extrémités opposées sont fixées chacune à un bras (3D, 3G), lui-même fixé d'une part à la caisse du véhicule et, d'autre part à une roue, **caractérisé par le fait que** :
- ladite traverse (2) est conforme à l'une des revendications 1 à 4 ou obtenue conformément au procédé selon l'une des revendications 5 à 9.

11. Essieu selon la revendication 10, **caractérisé par le fait qu'**il est dépourvu de barre anti-dévers.

12. Essieu selon la revendication 10 ou 11, **caractérisé par le fait que** :
- chaque bras (3D, 3G) est formé de deux profilés (30, 31) ou coquilles à section en "U", respectivement inférieur(e) et supérieur(e), réuni(e)s au niveau des extrémités de leurs ailes ;
- les parois intérieure (20) et extérieure (21) de la traverse (2) sont respectivement solidaires desdits profilés ou coquilles (30, 31).

## Claims

1. A deformable cross-member (2) of a motor vehicle rear axle, which consists of a single and unique metal sheet (5) shaped notably by stamping and/or folding, and which has, as seen in a transverse sectional view, a closed contour, this contour having the general shape of a "U", a first portion of the sheet (5) delimiting an "interior" wall (20) of this "U", while a second portion delimits an "exterior" wall (21) of this "U", spaced apart from the first, **characterized by** the fact that longitudinally, said interior wall (20) extends beyond the exterior wall (21).

2. The cross-member according to claim 1, **characterized by** the fact that the "U" has a symmetrical shape.

3. The cross-member according to claim 1 or 2, **characterized by** the fact that said exterior wall (21) is formed by the joining, i.e. the junction, of two opposite edges (511, 521) of said sheet (5).

4. The cross-member according to claim 3, **characterized by** the fact that said edges (511, 521) are attached to each other, notably by welding or crimping.

5. A method for manufacturing a deformable cross-member (2) of a motor vehicle rear axle according to one of claims 1 to 4, **characterized by** the fact that it consists of successively applying the following steps to a single planar metal sheet (5):
a/ deforming said sheet (5) on either side of a median plane (P₂) perpendicular to the plane (P₁) of the sheet (5) in order to form a protruding element (50), which rises above said plane (P₁) of the sheet over the whole of its length;
b/ deforming and raising the longitudinal wings (51,52) of the sheet (5) on either side of said protruding element (50),
c/ joining the edges (511, 521) of these wings (51, 52) above, and at a distance from said protruding element (50),
and in that a sheet is used, having a shape such that at the end of the application of said steps a/, b/, c/, the interior wall (20) of said cross-member (2) extends beyond the exterior wall (21).

6. The method according to the preceding claim, **characterized by** the fact that, in step a/, a protruding element (50) is formed, including two parallel flanks (500) perpendicular to the plane (P₁) of the sheet.

7. The method according to one of claims 5 or 6, **characterized by** the fact that between steps b/ and c/, an additional step b'/is applied, in which it is proceeded with the deformation of the flanks (500) of the protruding element (50) in order to bring them closer to each other.

8. The method according to one of claims 5 to 7, **characterized by** the fact that, in said step c/, it is proceeded with the joining of said edges (511, 521) by displacing said wings (51, 52) by means of cams.

9. The method according to one of claims 5 to 8, **characterized by** the fact that, in step c/, it is proceeded with the joining of said edges (511, 521) so that they overlap or are placed side-by-side.

10. A motor vehicle rear axle (1), which comprises a deformable cross-member (2), the opposite ends of which are each attached to an arm (3D, 3G), itself attached to the body of the vehicle on the one hand and to a wheel on the other hand, **characterized by** the fact that:
- said cross-member (2) is in accordance with one of claims 1 to 4, or obtained in accordance with the method according to one of claims 5 to 9.

11. The axle according to claim 10, **characterized in that** by the fact that it is without any anti-roll bar.

12. The axle according to claim 10 or 11, **characterized in that** by the fact that:
- each arm (3D, 3G) is formed with two, respectively lower and upper, profiles (30, 31) or shells with a "U" section, joined at the ends of their wings;
- the interior (20) and exterior (21) walls of the cross-member (2) are respectively integral with said profiles or shells (30,31).

## Patentansprüche

1. Verformbarer Querträger (2) für die Hinterachse von Kraftfahrzeugen, der aus einem einzelnen und einzigen Blech (5) aus Metall gebildet ist, das insbesondere durch Tiefziehen und/oder Biegen geformt wird, und der im Querschnitt betrachtet eine geschlossene Kontur hat, wobei diese Kontur die allgemeine Form eines "U" hat und wobei ein erster Abschnitt des Blechs (5) eine "innere" Wand (20) des "U" bildet, während ein zweiter Abschnitt eine "äußere" Wand (21) des "U" bildet, die von der ersteren einen Abstand hat, **dadurch gekennzeichnet, dass** in Längsrichtung die innere Wand (20) sich über die äußere Wand (21) hinaus erstreckt.

2. Querträger nach Anspruch 1, **dadurch gekennzeichnet, dass** das "U" eine symmetrische Form hat.

3. Querträger nach Anspruch 1 oder 2, **dadurch gekennzeichnet, dass** die äußere Wand (21) durch die Vereinigung, das heißt durch die Verbindung zweier entgegengesetzter Ränder (511, 521) des Blechs (5) gebildet wird.

4. Querträger nach Anspruch 3, **dadurch gekennzeichnet, dass** die Ränder (511, 521) insbesondere durch Schweißen oder Falzen fest miteinander verbunden werden.

5. Verfahren zur Herstellung eines verformbarer Querträgers (2) für die Hinterachse von Kraftfahrzeugen nach einem der Ansprüche 1 bis 4, **dadurch gekennzeichnet, dass** es darin besteht, auf ein einziges ebenes Metallblech (5) nacheinander die folgenden Schritte anzuwenden:
a) Verformen des Blechs (5) auf beiden Seiten einer Mittelebene (P₂) und dies senkrecht zur Ebene (P₁) des Blechs (5), um ein hervorstehendes Element (50) zu bilden, das sich über die Ebene (P₁) des Blechs erhebt, und dies auf seiner gesamten Länge;
b) Verformen und Anheben der Längsflügel (51, 52) des Blechs (5) auf beiden Seiten des hervorstehenden Elements (50);
c) Vereinigen der Ränder (511, 521) der Flügel (51, 52) über dem hervorstehenden Element (50) und in einem Abstand zu diesem,
und **dadurch**, dass ein Blech verwendet wird, das eine solche Form hat, dass nach dem Ausführen der Schritte a), b), c) die innere Wand (20) des Querträgers (2) sich über die äußere Wand (21) hinaus erstreckt.

6. Verfahren nach dem vorhergehenden Anspruch, **dadurch gekennzeichnet, dass** im Schritt a) ein hervorstehendes Element (50) gebildet wird, das zwei Flanken (500) umfasst, die parallel und senkrecht zur Ebene (P₁) des Blechs sind.

7. Verfahren nach einem der Ansprüche 5 oder 6, **dadurch gekennzeichnet, dass** zwischen den Schritten b) und c) ein zusätzlicher Schritt b') ausgeführt wird, in dem eine Verformung der Flanken (500) des hervorstehenden Elements (50) ausgeführt wird, um sie einander anzunähern.

8. Verfahren nach einem der Ansprüche 5 bis 7, **dadurch gekennzeichnet, dass** im Schritt c) die Vereinigung der Ränder (511, 521) durch das Bewegen der Flügel (51, 52) mittels Nocken ausgeführt wird.

9. Verfahren nach einem der Ansprüche 5 bis 8, **dadurch gekennzeichnet, dass** im Schritt c) die Vereinigung der Ränder (511, 521) so ausgeführt wird, dass sie übereinander Greifen oder dass sie aneinander gedrückt sind.

10. Hinterachse (1) für Kraftfahrzeuge, die einen verformbaren Querträger (2) umfasst, dessen entgegengesetzte Enden jeweils an einem Arm (3D, 3G) befestigt sind, der seinerseits zum Einen an der Karosserie des Fahrzeugs und zum Anderen an einem Rad befestigt ist, **dadurch gekennzeichnet, dass**:
- der Querträger (2) gemäß einem der Ansprüche 1 bis 4 ausgeführt ist oder gemäß dem Verfahren nach einem der Ansprüche 5 bis 9 hergestellt ist.

11. Achse nach Anspruch 10, **dadurch gekennzeichnet, dass** sie keinen Querstabilisator aufweist.

12. Achse nach Anspruch 10 oder 11, **dadurch gekennzeichnet, dass**:
- jeder Arm (3D, 3G) aus zwei Profilteilen (30, 31) oder Schalen mit "U"-förmigem Querschnitt gebildet ist, und zwar einem oder einer unteren bzw. einem oder einer oberen, die im Bereich der Enden ihrer Flügel zusammengefügt sind;
- die innere (20) und äußere (21) Wand des Querträgers (2) beide fest mit den Profilteilen oder Schalen (30, 31) verbunden sind.
